# EUROPÄISCHE PATENTSCHRIFT

(11) **EP 3 069 565 B1**
(45) Veröffentlichungstag und Bekanntmachung des Hinweises auf die Patenterteilung: **08.04.2020**
(21) Anmeldenummer: 14765871.0
(22) Anmeldetag: 06.09.2014
(51) Int. Cl.: H04N 21/414, H04L 12/915, H04L 12/927, H04L 12/911, H04W 28/24

(54) **VERFAHREN UND VORRICHTUNG FÜR EINE DYNAMISCHE REGELUNG VON BANDBREITE IN EINER KOMMUNIKATIONSANORDNUNG**
METHOD AND DEVICE FOR DYNAMICALLY CONTROLLING BANDWIDTH IN A COMMUNICATION SYSTEM
PROCÉDÉ ET DISPOSITIF DE RÉGULATION DYNAMIQUE DE LARGEUR DE BANDE DANS UN SYSTÈME DE COMMUNICATION

(30) Priorität: 15.11.2013 DE 102013019193
(43) Veröffentlichungstag der Anmeldung: 21.09.2016
(73) Patentinhaber: Audi AG, 85045 Ingolstadt (DE)
(72) Erfinder: ENGELHARD, Lars, 85304 Ilmmünster (DE); ENGELHARD, Stefanie, 85304 Ilmmünster (DE)
(74) Vertreter: Bauer, Dominik Michael
(86) Internationale Anmeldenummer: PCT/EP2014/002421
(87) Internationale Veröffentlichungsnummer: WO 2015/070937

(56) Entgegenhaltungen:
- EP-A1- 2 400 696
- DE-A1-102010 030 224
- DE-A1-102011 118 706
- DE-A1-102012 109 620
- JING SU ET AL: "Haggle: Seamless Networking for Mobile Applications", 16. September 2007 (2007-09-16), UBICOMP 2007: UBIQUITOUS COMPUTING; [LECTURE NOTES IN COMPUTER SCIENCE], SPRINGER BERLIN HEIDELBERG, BERLIN, HEIDELBERG, PAGE(S) 391 - 408, XP019070912, ISBN: 978-3-540-74852-6 Absätze [001.], [003.], [04.3], [0009]
- RIDONG FEI ET AL: "A QoS-Aware Dynamic Bandwidth Allocation Algorithm for Relay Stations in IEEE 802.16j-Based Vehicular Networks", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706402, ISBN: 978-1-4244-6396-1

## Beschreibung

Die vorliegende Erfindung betrifft ein Verfahren und eine Vorrichtung zur dynamischen Regelung einer Datenkommunikation innerhalb einer Kommunikationsanordnung mit mehreren Kommunikationsteilnehmern.

In heutigen Kommunikationsanordnungen, wie bspw. mobilen Endgeräten, werden häufig mehrere Kommunikationsteilnehmer, wie bspw. sogenannte Apps parallel verwendet. Jeder dieser Kommunikationsteilnehmer kann eine Bandbreite, d.h. ein bestimmtes Datenvolumen beanspruchen, die über eine einzelne und begrenzte Datenverbindung eines jeweiligen Endgerätes verläuft. Dabei verhält sich jeder Kommunikationsteilnehmer in Unkenntnis über andere Kommunikationsteilnehmer gegenüber diesen anderen Kommunikationsteilnehmern konkurrierend d.h. "egoistisch" in seinen Anforderungen an die Datenverbindung des jeweiligen Endgerätes. Da die Datenverbindung eines jeweiligen Endgerätes eine definierte Bandbreite aufweist, kann darüber jedoch nur eine beschränkte Menge an Daten zur Verfügung gestellt werden. Daher kommt es im Falle eines parallelen Nutzens der jeweiligen Datenverbindung durch jeweilige Kommunikationsteilnehmer häufig zu Konfliktsituationen, in denen eine Versorgung aller Kommunikationsteilnehmer mit entsprechendem Datenvolumen nicht mehr gewährleistet ist.

Insbesondere in Bezug auf ein jeweiliges Nutzererlebnis sind bestimmte Kommunikationsteilnehmer ggf. anderen Kommunikationsteilnehmern vorzuziehen, d.h. zu priorisieren und mit einem bestimmten Datenvolumen zu einem bestimmten Zeitpunkt auf Kosten anderer Kommunikationsteilnehmer zu versorgen. Im Stand der Technik sind verschiedene Verfahren und Vorrichtungen zur Priorisierung beschrieben.

Ein Telematiksystem für ein Kraftfahrzeug mit einer Datenverbindung zu zumindest einem Dienstanbieter ist in der deutschen Druckschrift DE 10 2009 023 528 A1 offenbart. Dabei ist vorgesehen, eine Priorisierung eines über eine Datenverbindung erfolgenden Transfers dienstrelevanter Daten für eine erste Dienstapplikation gegenüber einem Transfer dienstrelevanter Daten für eine zweite Dienstapplikation in Abhängigkeit von einer aktuellen Menüposition bzw. einem aktuellen Menüzweig innerhalb einer menübasierten Interaktion eines Fahrzeuginsassen mit einer Mensch-Maschine Schnittstelle festzulegen.

In der deutschen Druckschrift DE 10 2012 109 620 A1 ist vorgesehen, ein smartphoneorientiertes Fahrzeug-Infotainment-System mittels einer WLAN oder DSRC Kommunikation derart mit Daten zu versorgen, dass, sobald eine solche Verbindung existiert, soviele Daten wie möglich heruntergeladen werden und die dadurch gesammelten Daten oder Files an jeweilige Anfragen elektronischer Geräte verteilt werden. Weiterhin ist vorgesehen, die teilnehmenden elektronischen Geräte auf Grundlage eines Token-basierten Verfahrens zu priorisieren, d.h. in einem jeweiligen Zugang zu den heruntergeladenen Datenvolumina zu verstärken bzw. zu begrenzen. Eine Priorisierung kann dabei einen proportional erhöhten Anteil oder einen ausschließlichen Anteil an jeweiligen Daten bedeuten.

Ein weiteres Verfahren zur Datenübertragung zwischen einer Kommunikationseinheit und einem Fahrzeug ist in der deutschen Druckschrift DE 10 2010 030 224 A1 offenbart. Dabei ist vorgesehen, dass eine Steuereinheit eine Reihenfolge von auszuführenden Jobs anhand einer Priorität bestimmen kann. So kann bei beschränkten oder widrigen Kommunikationsbedingungen, wichtigeren Daten mit höherer Priorität Vorrang gewährt werden vor Daten mit einer vergleichsweise niedrigeren Priorität. Weiterhin ist dabei vorgesehen, dass eine jeweilige Priorisierung z.B. von einer Applikation und/oder einem Benutzer vorgegeben werden kann.

In der deutschen Druckschrift DE 10 2011 118706 A1 wird ein Verfahren offenbart, bei dem ein Steuergerät den Datenaustausch nach einem Zeitplan regelt, so dass in Abhängigkeit einer zu erwartenden Datenversorgung auf einer vorgegebenen Strecke Datenpakete von einer Datenquelle heruntergeladen werden, wobei die Daten anschließend einem Audiosystem oder einem anderen System des Fahrzeugs zur Verfügung gestellt werden.

Die Druckschrift "A QoS-Aware Dynamic Bandwith Allocation Algorithm for Relay Stations in IEEE 802.16j-Based Vehicular Networks" von Ridong Fei et al. betrifft ein Verfahren zum Verwalten einer Prozedur zum Hochladen von Daten aus einem Fahrzeug in einem Datennetzwerk.

Das Dokument "Haggle: Seamless Networking for Mobile Applications" von Jing Su et. al. beschreibt Haggle, d. h. eine Architektur für mobile Geräte, die eine nahtlose Netzwerkkonnektivität und Anwendungsfunktionalität in dynamischen mobilen Umgebungen erlaubt. Haggle erlaubt eine Anwendungslogik von Transportwegen zu trennen, so dass Anwendungen kommunikationsunabhängig sein können.

Ein Kommunikationssystem für eine Fahrzeug-zu-Umgebung Kommunikation mit einem Empfangssteuergerät ist in der deutschen Druckschrift DE 10 2011 107 111 A1 offenbart. In der genannten Druckschrift wird beschrieben, dass das Empfangssteuergerät Daten von Objekten aus einer Umgebung eines Fahrzeugs empfängt und während des Empfangs ein Kommunikationsstapel abgearbeitet wird. Um die Daten zügig und effektiv zu erfassen, wird vorgeschlagen, dass die Daten in zumindest zwei verschiedene Relevanzklassen einsortiert werden und abhängig von der jeweiligen Relevanzklasse in dem Kommunikationsstapel weiterverarbeitet werden. Durch eine Priorisierung eines jeweiligen Relevanzstapels können jeweilige im Relevanzstapel zugeordnete Aufgaben schneller abgearbeitet werden als die Aufgaben, die einem anderen Relevanzstapel zugeordnet wurden.

Ferner ist in der internationalen Anmeldung WO 2008/061745 A2 ein System zur Anzeige von Videodaten in einem Fahrzeug offenbart, wobei die Übertragung der Videodaten gegenüber einer Anzeige auf einer Anzeigeeinheit bandbreitenreduziert vorgesehen ist.

Vor diesem Hintergrund wird ein Verfahren zur dynamischen Regelung einer Zuteilung von Datenvolumina an Kommunikationsteilnehmer einer Kommunikationsanordnung gemäß Patentanspruch 1 vorgestellt. Weitere Ausgestaltungen sind den entsprechenden Unteransprüchen zu entnehmen. Ferner wird eine Vorrichtung mit den Merkmalen des unabhängigen Patentanspruchs 7 vorgestellt. Bei dem erfindungsgemäßen Verfahren ist vorgesehen, dass zum Austausch von Daten in einer Kommunikationsanordnung, die Kommunikationsanordnung eine Anzahl Kommunikationsteilnehmer und ein zentrales in einem Fahrzeug integriertes Endgerät umfasst, wobei jeweilige Kommunikationsteilnehmer über das als Vermittlungsgerät verwendete integrierte Endgerät unter Verwendung einer Funkverbindung mit einer Datenquelle Daten austauschen, und wobei mindestens einer der Kommunikationsteilnehmer einen Anforderungskatalog an einen auf dem integrierten Endgerät ausgeführten intelligenten Verbindungsmanager übermittelt, und wobei der Anforderungskatalog Bandbreiten bedingte Informationen zu einer Applikation des mindestens einen Kommunikationsteilnehmers umfasst, wobei eine jeweilige einem jeweiligen Kommunikationsteilnehmer zugeordnete Bandbreite einer Datenverbindung zwischen dem mit der Anzahl Kommunikationsteilnehmer verbundenen und als Vermittlungsgerät verwendeten integrierten Endgerät und der Datenquelle durch den intelligenten Verbindungsmanager dynamisch in Abhängigkeit einer bereitzustellenden Regel reduziert oder erhöht wird, wobei die Regel durch den intelligenten Verbindungsmanager selbst bereitgestellt wird und festlegt, nach welchem Muster bzw. welchen Anteilen eine jeweilige Bandbreite auf jeweilige Kommunikationsteilnehmer verteilt wird, wobei eine interne Priorisierung von auf einem in Form eines Rear Seat Entertainments ausgebildeten Kommunikationsteilnehmer ausgeführten Applikationen bezüglich der zur Verfügung stehenden Bandbreite durch einen Fahrer des Fahrzeugs mittels eines Schiebereglers einer mit dem integrierten Endgerät in Verbindung stehenden Regeleinheit beeinflusst wird.

Im Glauben an stetig wachsende Bandbreite durch Fortschreiten der Technologie ist eine Notwendigkeit zur Optimierung eines Bandbreitenmanagements bislang verkannt worden. Blickt man jedoch genauer in Technologien, wie bspw. LTE, und bezieht eine Entwicklung und zunehmende Verbreitung von Endgeräten mit ein, wird schnell klar, dass eine zukünftig verfügbare Bandbreitenanbindung, insbesondere für mobile Endgeräte, begrenzt sein wird. Zudem halten auf mobilen Endgeräten zunehmend Applikationen Einzug, die im Hintergrund ablaufen, also unabhängig von Benutzeraktionen agieren, jedoch zu jeder beliebigen Zeit Bandbreite von dem mobilen Endgerät fordern, und dadurch ggf. in Konkurrenz zu einer Benutzeraktion treten.

Durch eine zur Ausführung der Benutzeraktion unzureichende Bandbreite schränkt sich ein Benutzererlebnis stark ein und eine durch einen jeweiligen Nutzer gefühlte und beobachtete Dienstverfügbarkeit nimmt rapide ab.

Um einem jeweiligen Nutzer einer Kommunikationsanordnung bzw. eines jeweiligen Kommunikationsteilnehmers einer Kommunikationsanordnung ein ungetrübtes, d.h. nicht eingeschränktes Benutzererlebnis zu ermöglichen, kann die zur Verfügung stehende Bandbreite entweder erhöht oder die Bandbreite durch Umverteilung effektiv genutzt werden. Demnach ist erfindungsgemäß vorgesehen, dass eine jeweilige innerhalb der Kommunikationsanordnung zur Verfügung stehende Bandbreite, d.h. eine zur Verfügung stehende Menge an potenziell verfügbarem Datenvolumen derart verwaltet bzw. geregelt wird, dass dem Nutzer ggf. auftretende Engpässe in einer aktuell verfügbaren Bandbreite verborgen bleiben.

Um den Nutzer vor aktuellen ggf. auftretenden Engpässen in der jeweiligen zur Verfügung stehenden Bandbreite zu bewahren, muss ein Datenaustausch jeweiliger Kommunikationsteilnehmer so geregelt werden, dass diejenigen Kommunikationsteilnehmer, die für das Benutzererlebnis des Nutzers relevant sind, bevorzugt behandelt werden, d.h. gegenüber weniger relevanten Kommunikationsteilnehmern bevorzugt mit Bandbreite bzw. Datenvolumen versorgt werden.

Da sich jedoch eine Anzahl von Kommunikationsteilnehmern innerhalb einer jeweiligen Kommunikationsanordnung schnell und stark ändern kann, bspw. durch Starten bzw. Stoppen von Diensten, ist eine starre bzw. feste Zuweisung von Prioritäten nur bedingt sinnvoll.

Durch Verwendung eines erfindungsgemäßen intelligenten Verbindungsmanagers ist es möglich, eine dienstspezifische dynamische Skalierung der Bandbreite pro Kommunikationsteilnehmer zu erreichen. Durch eine zentrale Funktion, die in einem beliebigen Kommunikationsteilnehmer der jeweiligen Kommunikationsanordnung verortet sein kann, kann die jeweilige Datenverbindung des jeweiligen Endgeräts auf jeweilige anfordernde Applikationen bzw. Kommunikationsteilnehmer dynamisch und in Abhängigkeit bspw. einer zuvor bereitzustellenden Regel verteilt werden.

Die bereitzustellende Regel wird durch den intelligenten Verbindungsmanager selbst bereitgestellt und legt fest, nach welchem Muster bzw. welchen Anteilen eine jeweilige Bandbreite auf jeweilige Kommunikationsteilnehmer verteilt wird.

In einer möglichen Ausgestaltung des erfindungsgemäßen Verfahrens ist vorgesehen, dass mindestens ein Teilnehmer ein mobiles Endgerät ist.

Durch Verwendung eines mobilen Endgerätes, das im Regelfall mit einem Zugang zu einem Datennetzwerk, insbesondere dem Internet ausgestattet ist, können Datenpakete, die ggf. unter jeweiligen mit dem Endgerät verbundenen Kommunikationsteilnehmern zu verteilen sind, empfangen bzw. gesendet werden. Ferner bieten mobile Endgeräte häufig eine Möglichkeit zur Ausführung von computerbasierten Funktionen, wie bspw. dem intelligenten Verbindungsmanager.

Unter einem Verbindungsmanager ist im Kontext der vorgestellten Erfindung ein Modul zur Durchführung eines Verfahrens zum Austausch von Daten in einer Kommunikationsanordnung zu verstehen, bei dem jeweiligen von der Kommunikationsanordnung umfassten Kommunikationsteilnehmern, gemäß einer zuvor bereitgestellten Regel, jeweilige Datenvolumina dynamisch zugeteilt und relativ zueinander geregelt werden.

In einer weiteren möglichen Ausgestaltung des erfindungsgemäßen Verfahrens ist vorgesehen, dass mindestens ein Kommunikationsteilnehmer einen Anforderungskatalog an den intelligenten Verbindungsmanager übermittelt.

Um die jeweilige zur Verfügung stehende Bandbreite dynamisch, d.h. in Abhängigkeit jeweiliger Anforderungen des Nutzers und/oder jeweiliger Kommunikationsteilnehmer der Kommunikationsanordnung zuzuordnen, sind Informationen über eine Funktion des jeweiligen Kommunikationsteilnehmers zwingend notwendig. Diese Informationen werden durch einen Anforderungskatalog von dem jeweiligen Kommunikationsteilnehmer bereitgestellt.

Ist ein Kommunikationsteilnehmer nicht dazu konfiguriert, dem intelligenten Verbindungsmanager einen derartigen Anforderungskatalog zur Verfügung zu stellen, so setzt der intelligente Verbindungsmanager anstelle von realen normalerweise in einem entsprechenden Anforderungskatalog hinterlegten Anforderungswerten für eine für den entsprechenden Kommunikationsteilnehmer zur Verfügung zu stellende Bandbreite sogenannte Default- oder Standard-Werte. Dadurch ist es möglich, dass auch solche Kommunikationsteilnehmer ohne Anforderungskatalog in die Kommunikationsanordnung eingebunden werden können und auch Bandbreite zur Verfügung gestellt bekommen, auch wenn diese in der Regel nicht der für den Kommunikationsteilnehmer idealen Bandbreite entspricht oder nicht instantan sondern ggf. mit einem zeitlichen Versatz bereit gestellt wird.

In einer weiteren möglichen Ausgestaltung des erfindungsgemäßen Verfahrens ist vorgesehen, dass der Anforderungskatalog mindestens die folgenden Informationen umfasst:
a) erwartete durchschnittlich belegte Bandbreite;
b) Mindestanforderungen zur Durchführung einer mit dem jeweiligen Kommunikationsteilnehmer verbundenen Aufgabe;
c) Informationen darüber, ob eine Reduktion einer dem jeweiligen Kommunikationsteilnehmer zugeordneten Bandbreite für jeweilige Funktionen des Kommunikationsteilnehmers schädlich ist;
d) Informationen darüber, ob ein zeitlicher Versatz in der dem jeweiligen Kommunikationsteilnehmer zugeordneten Bandbreite für jeweilige Funktionen des Kommunikationsteilnehmers schädlich ist.

Unter einem Kommunikationsteilnehmer ist im Kontext der vorgestellten Erfindung ein Gerät, dass für einen Datenaustausch mit einer Datenquelle verwendungsfähig ist, insbesondere ein mobiles Endgerät sowie jede technisch geeignete Anwendung bzw. Funktion, die auf einem solchen Gerät ausgeführt werden kann, zu verstehen, wobei die jeweiligen Anwendungen bzw. Funktionen, bspw. Applikationen (sogenannte Apps), dazu geeignet sind, Datenmengen auszutauschen, zu empfangen und zu verarbeiten sowie sich mit einer Kommunikationsanordnung, ggf. verwaltet durch einen intelligenten Verbindungsmanager, zu verbinden.

Unter einer Kommunikationsanordnung ist im Kontext der vorgestellten Erfindung ein Verbund aus einer Anzahl Kommunikationsteilnehmer zu verstehen, wobei die jeweiligen Kommunikationsteilnehmer mit zumindest einem Endgerät, das eine Bandbreite zur Versorgung der Anzahl Kommunikationsteilnehmer mit Datenvolumina zur Verfügung stellt, verbunden sind.

Es ist ferner vorgesehen, unter Verwendung der von den jeweiligen Kommunikationsteilnehmern in dem jeweiligen Anforderungskatalog übermittelten Angaben, eine dynamische Priorisierung bezüglich der zur Verfügung stehenden Datenvolumina bzw. Bandbreite vorzunehmen. Dabei ist bei jeweiligen Kommunikationsteilnehmern mit einer sehr hohen zu erwartenden durchschnittlich belegten Bandbreite zu prüfen, ob ggf. eine niedrigere Mindestanforderung zur Durchführung einer mit dem jeweiligen Kommunikationsteilnehmer verbundenen Aufgabe besteht. Ist die zu erwartende durchschnittlich belegte Bandbreite des jeweiligen Kommunikationsteilnehmers überdurchschnittlich hoch und besteht keine Möglichkeit zur Reduktion auf eine Mindestanforderung, so wird eine jeweilige Priorisierung bzw. eine Priorität des jeweiligen Kommunikationsteilnehmers durch den intelligenten Verbindungsmanager zunächst bspw. als niedrig eingestuft.

Weiterhin ist zu prüfen, ob eine Reduktion der dem jeweiligen Kommunikationsteilnehmer zugeordneten Bandbreite für eine reibungslose Funktion des Kommunikationsteilnehmers schädlich ist. Ist dies der Fall und ist ferner ein zeitlicher Versatz in einer mit dem jeweiligen Kommunikationsteilnehmer verbundenen Datenübertragung für eine reibungslose Funktion des Kommunikationsteilnehmers schädlich, so ist dessen Priorisierung ggf. hochzustufen.

Es ist vorgesehen, dass der intelligente Verbindungsmanager die von den jeweiligen Kommunikationsteilnehmern über den Anforderungskatalog bzw. ein Manifest bereitgestellten Informationen erfasst, auswertet, integriert und dadurch eine dynamische Priorisierung der jeweiligen Kommunikationsteilnehmer erstellt.

Unter dem Begriff "dynamisch" ist im Kontext der vorliegenden Erfindung ein Vorgang zu verstehen, bei dem eine jeweilige einem jeweiligen Kommunikationsteilnehmer zugeordnete Bandbreite bzw. ein zugeordnetes Datenvolumen in Abhängigkeit von jeweiligen Eigenschaften und einer Anzahl weiterer Kommunikationsteilnehmer einer jeweiligen Kommunikationsanordnung sowie in Abhängigkeit einer ggf. vorhandenen Regel beschränkt oder erweitert wird. Darunter fällt auch die Option, eine von einem Kommunikationsteilnehmer angeforderte Bandbreite, soweit aktuelle Umstände, wie bspw. andere aktuell vorhandene und jeweilig Bandbreite anfordernde Kommunikationsteilnehmer, es erfordern, mit einem definierten zeitlichen Versatz dem entsprechenden Kommunikationsteilnehmer zur Verfügung zu stellen.

In einer weiteren Ausführungsform des erfindungsgemäßen Verfahrens ist vorgesehen, dass der intelligente Verbindungsmanager ein jeweiliges von einem jeweiligen Kommunikationsteilnehmer angefordertes Datenvolumen in Abhängigkeit einer bereitzustellenden Regel regelt.

Unter einer Regel ist im Kontext der vorgestellten Erfindung eine vorgegebene Verfahrensweise für eine Zuordnung bzw. Zuteilung von Bandbreite bzw. Datenvolumina an jeweilige Kommunikationsteilnehmer zu verstehen. Eine Regel kann bspw. von einem Nutzer vorgegeben oder durch einen Algorithmus bereitgestellt werden.

Unter dem Begriff "regeln" ist entsprechend ein Vorgang des Zuteilens bzw. Bereitstellens von Datenvolumina bzw. Bandbreite zu verstehen, wobei der Vorgang auch ein Beschränken, Sperren oder ein Einräumen von exklusiven Rechten jeweiliger Kommunikationsteilnehmer gegenüber weiteren Kommunikationsteilnehmern umfasst.

Durch Verwendung eines Bedienfelds ist es einem Nutzer möglich, die Zuordnung bzw. Zuteilung von Bandbreite bzw. Datenvolumina zu einem Kommunikationsteilnehmer zu ändern und dadurch bevorzugte Kommunikationsteilnehmer bspw. höher zu priorisieren.

Es ist ferner vorgesehen, dass der intelligente Verbindungsmanager diejenigen Kommunikationsteilnehmer priorisiert, die für das Benutzererlebnis des Nutzers von hoher Relevanz sind. Durch eine niedrige Priorisierung von Kommunikationsteilnehmern, wie bspw. Hintergrunddiensten, bei denen ein zeitlicher Versatz in der notwendigen Datenübertragung die jeweiligen Funktionen des Kommunikationsteilnehmers nicht schädigt bzw. beeinflusst, kann zugunsten von höher priorisierten Diensten auf eine spätere Ausführung bzw. eine spätere Versorgung mit Bandbreite bzw. Datenvolumina ausgewichen werden.

In einer weiteren möglichen Ausgestaltung des erfindungsgemäßen Verfahrens ist vorgesehen, dass mindestens ein Kommunikationsteilnehmer seine Verortung an mindestens einen intelligenten Verbindungsmanager übermittelt.

Unter einer Verortung ist im Kontext der vorgestellten Erfindung eine Stellung, d.h. eine Position des jeweiligen Kommunikationsteilnehmers innerhalb der Kommunikationsanordnung zu verstehen. So kann ein Kommunikationsteilnehmer bspw. innerhalb eines Endgerätes verortet sein oder mittels geeigneter Verfahren, wie bspw. einem WLAN Hotspot oder anderer Verfahren zur Kopplung externer Geräte an eine zentrale Datenverbindung, mit dem Endgerät gekoppelt sein. In einem Fahrzeug kann bspw. eine Anzahl Steuergeräte über einen Bus, wie bspw. einen MOST-Bus oder eine andere geeignete Datenleitung mit einem zentralen Endgerät gekoppelt sein und dieses Endgerät als sogenanntes "Gateway", d.h. Vermittlungsgerät verwenden. Ferner vergibt der jeweilige intelligente Verbindungsmanager an jeden Kommunikationsteilnehmer, der sich bei ihm anmeldet, eine eindeutige Kennung, anhand derer der jeweilige Kommunikationsteilnehmer durch den intelligenten Verbindungsmanager zu identifizieren ist und die ggf. Informationen zu Anforderungen des jeweiligen Kommunikationsteilnehmers umfasst.

In einer weiteren möglichen Ausgestaltung des erfindungsgemäßen Verfahrens ist vorgesehen, dass jeweilige Kommunikationsteilnehmer von einem zentralen Kommunikationsteilnehmer mit Daten versorgt werden, wobei auf diesem zentralen Kommunikationsteilnehmer ein zentraler intelligenter Verbindungsmanager von den jeweiligen Kommunikationsteilnehmern angeforderte Datenvolumina nach einer bereitzustellenden Regel reguliert.

Um eine Regelung durch ein zentrales Gerät zu ermöglichen, ist es erforderlich, dass mit dem zentralen Gerät gekoppelte externe Kommunikationsteilnehmer ihre Verortung angeben, so dass der zentrale intelligente Verbindungsmanager diese Verortung in seiner Regelungsarbeit berücksichtigen kann. Daraus ergibt sich, dass jeder Kommunikationsteilnehmer eine zur Verfügung stehende Bandbreite auf gleiche Weise durch einen eigenen intelligenten Verbindungsmanager regeln kann oder durch einen zentralen intelligenten Verbindungsmanager auf einem zentralen Gerät regeln lassen kann.

In einer weiteren möglichen Ausgestaltung des erfindungsgemäßen Verfahrens ist vorgesehen, dass der intelligente Verbindungsmanager immer dann, wenn eine Gesamtverfügbarkeit einer Bandbreite zur Datenübertragung für die jeweiligen Kommunikationsteilnehmer nicht mehr ausreicht, aktiviert wird und bei einer ausreichenden Bandbreite deaktiviert wird.

Um eine möglichst effiziente und ressourcensparende Anwendung des intelligenten Verbindungsmanagers insbesondere in mobilen Endgeräten zu ermöglichen, ist vorgesehen, dass der intelligente Verbindungsmanager nur dann aktiv wird, wenn dieser eine Verbesserung einer zur Verfügung stehenden Bandbreite für mindestens einen Kommunikationsteilnehmer einer Kommunikationsanordnung bewirken kann.

Ferner ist denkbar, dass das erfindungsgemäße Verfahren innerhalb und außerhalb von Fahrzeugen eingesetzt wird. Mögliche Anwendungsbereiche sind bspw. Datenaggregation von sogenannten "BigData" Datensätzen, Schwarmintelligenz, Flottendienste, Smartphones oder Tablet-PCs sowie jede weitere Kommunikationsanordnung mit mehreren Kommunikationsteilnehmern, die Daten austauschen, d.h. beziehen.

Ferner umfasst die vorliegende Erfindung eine Vorrichtung zum Austausch von Daten in einer Kommunikationsanordnung mit einer Anzahl Kommunikationsteilnehmer, wobei die Vorrichtung als ein zentrales in einem Fahrzeug integriertes Endgerät ausgebildet ist, und wobei jeweilige Kommunikationsteilnehmer über das als Vermittlungsgerät verwendete integrierte Endgerät unter Verwendung einer Funkverbindung mit einer Datenquelle Daten austauschen können, und wobei von mindestens einem Kommunikationsteilnehmer ein Anforderungskatalog an einen auf dem integrierten Endgerät ausgeführten intelligenten Verbindungsmanager übermittelbar ist, und wobei der Anforderungskatalog bandbreitenbedingte Informationen zu einer Applikation des mindestens einen Kommunikationsteilnehmers umfasst, wobei der intelligente Verbindungsmanager dazu ausgebildet ist, eine jeweilige einem jeweiligen Kommunikationsteilnehmer zugeordnete Bandbreite einer Datenverbindung zwischen dem mit der Anzahl Kommunikationsteilnehmer verbundenen und als Vermittlungsgerät verwendeten integrierten Endgerät und der Datenquelle dynamisch in Abhängigkeit einer bereitzustellenden Regel zu reduzieren oder zu erhöhen, wobei die Regel durch den intelligenten Verbindungsmanager selbst bereitgestellt ist und festlegt, nach welchem Muster bzw. welchen Anteilen eine jeweilige Bandbreite auf jeweilige Kommunikationsteilnehmer zu verteilen ist, wobei eine interne Priorisierung von auf einem in Form eines Rear Seat Entertainments ausgebildeten Kommunikationsteilnehmer ausgeführten Applikationen bezüglich der zur Verfügung stehenden Bandbreite durch einen Fahrer des Fahrzeugs mittels eines Schiebereglers einer mit dem integrierten Endgerät in Verbindung stehenden Regeleinheit beeinflusst werden kann.

Die erfindungsgemäße Vorrichtung dient insbesondere zur Ausführung des erfindungsgemäßen Verfahrens. Ferner dient die erfindungsgemäße Vorrichtung zur Regelung von Datenvolumina bzw. Bandbreite, die durch ein Endgerät empfangen werden bzw. wird und innerhalb einer Kommunikationsanordnung zu verteilen sind bzw. ist. Dabei kann die Vorrichtung in einem beliebigen Kommunikationsteilnehmer integriert oder als externes Gerät mit den entsprechenden Kommunikationsteilnehmern gekoppelt sein.

Es ist vorgesehen, dass die erfindungsgemäße Vorrichtung einen jeweiligen verwendeten Datenstandard, wie bspw. WLAN oder Bluetooth oder jedes weitere technisch geeignete Protokoll zum Datenaustausch unterstützt, so dass auch eine Vermischung von Protokollen, wie bspw. eine Anbindung eines Kommunikationsteilnehmers an die erfindungsgemäße Vorrichtung über Bluetooth erfolgen kann, wobei die erfindungsgemäße Vorrichtung Ihrerseits über WLAN mit dem jeweiligen Endgerät verbunden ist.

In einer möglichen Ausgestaltung der erfindungsgemäßen Vorrichtung ist vorgesehen, dass jeweilige Attribute jeweiliger Kommunikationsteilnehmer innerhalb der erfindungsgemäßen Vorrichtung zu hinterlegen sind, wobei die Attribute von dem mindestens einen intelligenten Verbindungsmanager für eine Zuteilung von Bandbreiten zu den jeweiligen Kommunikationsteilnehmern untereinander verwendungsfähig sind.

Da der intelligente Verbindungsmanager für eine Zuordnung jeweiliger Datenvolumina bzw. Bandbreite spezifische Informationen über jeweilige Attribute der zu versorgenden Kommunikationsteilnehmer, wie bspw. eine Verortung oder ein bevorzugtes Kommunikationsprotokoll benötigt, ist vorgesehen, diese Attribute bei jeder Kopplung eines Kommunikationsteilnehmers mit dem intelligenten Verbindungsmanager abzufragen und in der den intelligenten Verbindungsmanager bereitstellenden Vorrichtung zu hinterlegen, d.h. bspw. auf einem Datenmedium zu speichern.

In einer weiteren möglichen Ausgestaltung der erfindungsgemäßen Vorrichtung ist vorgesehen, dass mindestens ein Kommunikationsteilnehmer der Kommunikationsanordnung ein mobiles Endgerät mit einem Internetzugang ist.

Mobile Endgeräte wie bspw. Smartphones bieten sowohl ausreichend Rechenkapazität, um ein auf dem intelligenten Verbindungsmanager basierendes Computerprogramm auszuführen als auch über eine Schnittstelle zu einem Datennetzwerk, wie bspw. LTE oder 3G oder jede weitere technisch geeignete Datenübertragungsmethode, um Daten aus einem Netzwerk, wie bspw. dem Internet zu empfangen und an weitere Kommunikationsteilnehmer zu verteilen. Ferner sind auch weitere mobile Endgeräte zur Datenversorgung denkbar, wie bspw. Tablet-PCs, Notebooks, PDAs sowie jedes weitere technisch geeignete Gerät zum Empfang von Daten, wobei ein jeweiliges mobiles Endgerät auch fest in einem Fahrzeug verbaut bzw. in dieses integriert werden kann. Durch eine Integration des Endgerätes in einem Fahrzeug können bspw. Passagiere und/oder ein Infotainment-System mit Daten versorgt werden, wobei entweder das Infotainment-System oder die Passagiere bevorzugt mit Daten versorgt werden, indem die jeweiligen Endgeräte bspw. priorisiert werden.

Eine Priorisierung kann innerhalb einer jeweiligen Kommunikationsanordnung relativiert, d.h. im Bezug auf weitere Kommunikationsteilnehmer angepasst werden. Entsprechend kann bspw. ein Fahrer eines Fahrzeugs über einen Schieberegler die Priorisierung jeweiliger Passagiere bzw. der Kommunikationsteilnehmer der jeweiligen Passagiere wie bspw. ein Rear-Seat-Entertainment-System relativ zu einem Infotainment-System des Fahrzeugs verschieben, d.h. bspw. erhöhen. Dabei wird das Infotainment-System jedoch nicht komplett aus einer jeweiligen Datenversorgung herausgenommen, sondern mit einem reduzierten Datenvolumen bzw. einer reduzierten Bandbreite versorgt, wobei ein Umfang der Reduktion des Datenvolumens bzw. der Bandbreite in Abhängigkeit einer jeweiligen Stellung des Schiebereglers stärker oder schwächer ausfällt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch ausführlich beschrieben.

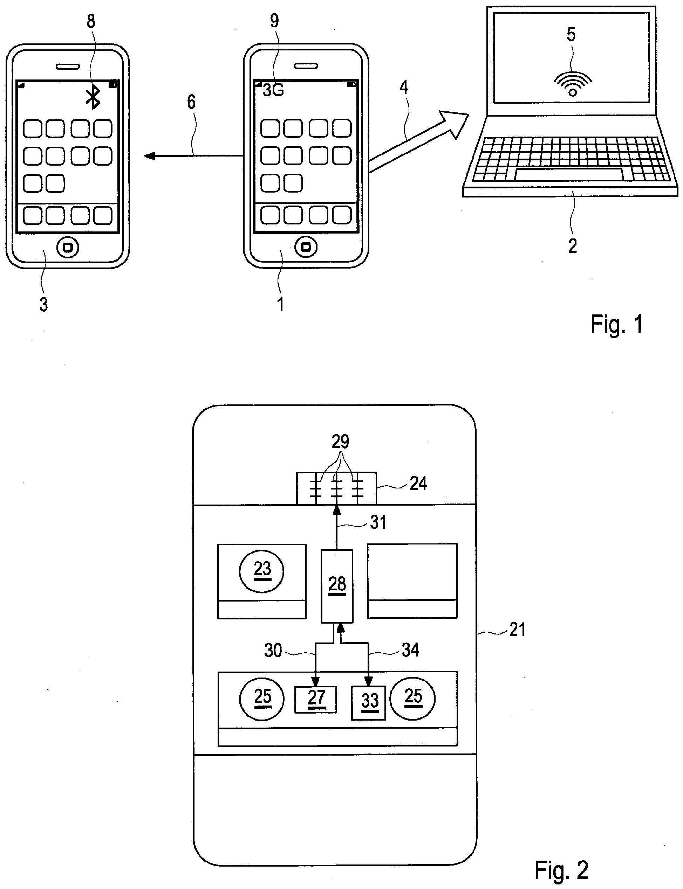

Figur 1 zeigt ein Beispiel einer Kommunikationsanordnung mit einem eine Ausführungsform des erfindungsgemäßen intelligenten Verbindungsmanagers umfassenden Endgerät sowie zwei weiteren Kommunikationsteilnehmern. Figur 2 zeigt eine mögliche Anordnung einer Ausführungsform der erfindungsgemäßen Vorrichtung in einem Fahrzeug.

Die in Figur 1 dargestellte Kommunikationsanordnung umfasst ein Endgerät 1, das mit einem Kommunikationsteilnehmer 2 in Form eines mobilen Computers über eine WLAN-Schnittstelle verbunden ist, wie durch das Symbol 5 angedeutet. Ferner ist das Endgerät 1 über eine Bluetooth-Schnittstelle mit einem weiteren Kommunikationsteilnehmer in Form eines Smartphones 3 verbunden, wie durch das Symbol 8 angedeutet. Das Endgerät 1 steht über eine Universal Mobile Telecommunications System- (UMTS-) bzw. 3G-Datenverbindung in Verbindung mit einem Netzwerk, d.h. dem Internet, wie durch Symbol 9 angedeutet.

Eine von dem Endgerät 1 über die 3G-Datenverbindung verfügbare Bandbreite wird durch einen erfindungsgemäßen intelligenten Verbindungsmanager, der auf dem Endgerät 1 ausgeführt wird, zwischen den jeweiligen Kommunikationsteilnehmern 2 und 3 aufgeteilt, wie durch die Pfeile 4 und 6 angedeutet. Dabei wird der Kommunikationsteilnehmer 2 gemäß einer zuvor bereitgestellten Regel priorisiert mit Daten versorgt, wie durch den verdickt gezeichneten Pfeil 4 verdeutlicht. Diese Priorisierung des Kommunikationsteilnehmers 2 geht zu Lasten einer Datenversorgung des Kommunikationsteilnehmers 3, der mit einer reduzierten Bandbreite versorgt wird, wie durch den schmal gezeichneten Pfeil 6 verdeutlicht wird.

Ferner ist der intelligente Verbindungsmanager in der Lage, die Aufteilung bzw. Zuordnung der zur Verfügung stehenden Bandbreite zwischen den Kommunikationsteilnehmern dynamisch zu regeln. Gemäß der zuvor bereitgestellten Regel kann bspw. vorgesehen sein, dass, sobald auf dem Endgerät 1 eine Applikation gestartet wird, diese mit einer gegenüber den Kommunikationsteilnehmern 2 und 3 erhöhten Priorität mit Bandbreite bzw. Datenvolumen versorgt wird. Entsprechend wird bspw. die Versorgung des Kommunikationsteilnehmers 2 reduziert, wohingegen die Versorgung des Kommunikationsteilnehmers 3 unverändert bleibt.

Ferner ist vorgesehen, dass, falls sich der Kommunikationsteilnehmer 3 per WLAN mit dem Endgerät 1 verbindet, der Kommunikationsteilnehmer 3 mit derselben Priorität wie Kommunikationsteilnehmer 2 versorgt wird.

Die in Figur 2 dargestellte Anordnung betrifft ein Infotainment-System 28, das in einem Fahrzeug 21 integriert ist. Das Infotainment-System 28 dient unter anderem zum Bereitstellen einer Ausführungsform des erfindungsgemäßen intelligenten Verbindungsmanagers und zur Verbindung des Fahrzeugs mit einem Netzwerk, d.h. dem Internet über eine Long Term Evolution- (LTE-) Schnittstelle. Das Infotainment-System 28 steht mittels der dargestellten Ausführungsform des erfindungsgemäßen intelligenten Verbindungsmanagers über einen MOST-Bus 30 in Verbindung mit einem Kommunikationsteilnehmer in Form einer Recheneinheit 27, die ggf. von einem Passagier 25 bedient wird. Bei der Recheneinheit 27 handelt es sich dabei um ein Rear Seat Entertainment (RSE).

Ferner steht das Infotainment-System 28 ebenfalls über einen MOST-Bus 31 in Verbindung mit einer Regeleinheit 24, die ggf. von einem Fahrer 23 des Fahrzeugs 21 bedient werden kann. Die Regeleinheit 24 umfasst in dem hier gezeigten Beispiel mehrere Schieberegler 29. Die Recheneinheit 27 kann jeweilige auf der Recheneinheit 27 ausgeführte Kommunikationsteilnehmer in Form von Applikationen über einen auf der Recheneinheit 27 ausgeführten intelligenten Verbindungsmanager intern operational, d.h. nicht persistent priorisieren. Das Infotainment-System 28 bzw. der intelligente Verbindungsmanager kann die Recheneinheit 27, die als RSE ausgebildet ist, als ganze Einheit in seine Priorisierung aufnehmen.

Mittels eines Schiebereglers kann der Fahrer 23 die interne Priorisierung der Applikationen durch den auf der Recheneinheit 27 ausgeführten intelligenten Verbindungsmanager in Verbindung mit dem von dem Infotainment-System 28 bereitgestellten zentralen intelligenten Verbindungsmanager beeinflussen, also jeweilige Kommunikationsteilnehmer eines Passagiers 25 auf einem Rücksitz des Fahrzeugs 21 entsprechend höher oder niedriger priorisieren.

Ferner führt das Infotainment-System 28 selbst mehrere Dienste, wie bspw. "Verkehrsinformationen Online" aus, die für eine Navigation berücksichtigt werden. In einer zuvor bereitgestellten Regel wurde festgelegt, dass dem Dienst "Verkehrsinformationen Online" eine höhere Priorität zusteht als dem Dienst "Nachrichten". Der Passagier 25 versorgt sich aktuell über ein Smartphone oder ein Laptop 33 mit Informationen, dass, wie durch Pfeil 34 angedeutet, bspw. über WLAN oder Bluetooth oder eine andere dazu geeignete Übertragungstechnologie mit dem Infotainment-System 28 verbunden ist. Da bei einer WLAN-Verbindung ggf. auftretende Latenzen vertretbar sind und eine genauere Einstufung von auf dem Smartphone bzw. dem Laptop 33 ausgeführten Applikationen nicht möglich ist, da keine dieser Applikationen mit dem intelligenten Verbindungsmanager verbunden ist, wird dem Smartphone bzw. dem Laptop 33 eine niedrige Priorität zugeordnet.

Weiterhin wird die Recheneinheit 27 als wichtig eingestuft, da dieser von einem Passagier 25 bedient wird. Somit werden Applikationsanforderungen mit einer Verortung in der Recheneinheit 27 von dem intelligenten Verbindungsmanager mit hoher Priorität behandelt, so dass diesen mehr Bandbreite bzw. Datenvolumen zur Verfügung gestellt wird als dem Smartphone bzw. dem Laptop 33.

Der intelligente Verbindungsmanager ist außerdem in der Lage, für eine Fahrt, d.h. Routenführung relevante Informationen, wie z.B. "Verkehrsinformationen Online" vor den Anfragen der Recheneinheit 27 zu setzen, damit eine jeweilige Fahrtzeit optimiert werden kann.

Es ist vorgesehen, dass eine Skalierung, d.h. Zuteilung von Bandbreite bzw. Datenvolumina entweder als Einstellung dynamisch ermöglicht wird, oder abhängig von einem jeweiligen Land und von einem darin vorherrschenden Nutzerverhalten gesetzt, d.h. vorgegeben werden kann. Dafür notwendige Einstellungen bzw. Skalierungsparameter können in eine proprietäre Kommunikation aufgenommen werden oder über Funktionen eines Standardprotokolls des intelligenten Verbindungsmanagers abgebildet werden.

## Patentansprüche

1. Verfahren zum Austausch von Daten in einer Kommunikationsanordnung, wobei die Kommunikationsanordnung eine Anzahl Kommunikationsteilnehmer (2, 3, 27) und ein zentrales in einem Fahrzeug integriertes Endgerät (28) umfasst, wobei jeweilige Kommunikationsteilnehmer (2, 3, 27) über das als Vermittlungsgerät verwendete integrierte Endgerät unter Verwendung einer Funkverbindung mit einer Datenquelle Daten austauschen, und wobei mindestens einer der Kommunikationsteilnehmer (2, 3, 27) einen Anforderungskatalog an einen auf dem integrierten Endgerät ausgeführten intelligenten Verbindungsmanager übermittelt, und wobei der Anforderungskatalog Bandbreiten bedingte Informationen zu einer Applikation des mindestens einen Kommunikationsteilnehmers (2, 3, 27) umfasst, wobei eine jeweilige einem jeweiligen Kommunikationsteilnehmer (2, 3, 27) zugeordnete Bandbreite einer Datenverbindung zwischen dem mit der Anzahl Kommunikationsteilnehmer (2, 3, 27) verbundenen und als Vermittlungsgerät verwendeten integrierten Endgerät (28) und der Datenquelle durch den intelligenten Verbindungsmanager dynamisch in Abhängigkeit einer bereitzustellenden Regel reduziert oder erhöht wird, wobei die Regel durch den intelligenten Verbindungsmanager selbst bereitgestellt wird und festlegt, nach welchem Muster bzw. welchen Anteilen eine jeweilige Bandbreite auf jeweilige Kommunikationsteilnehmer verteilt wird, wobei eine interne Priorisierung von auf einem in Form eines Rear Seat Entertainments ausgebildeten Kommunikationsteilnehmer (27) ausgeführten Applikationen bezüglich der zur Verfügung stehenden Bandbreite durch einen Fahrer des Fahrzeugs mittels eines Schiebereglers einer mit dem integrierten Endgerät (28) in Verbindung stehenden Regeleinheit (24) beeinflusst wird.

2. Verfahren nach Anspruch 1, bei dem mindestens ein Kommunikationsteilnehmer (2, 3, 27) als Applikation auf einem Endgerät gewählt ist.

3. Verfahren nach Anspruch 1 oder 2, bei dem mindestens ein Kommunikationsteilnehmer (2, 3, 27) ein mobiles Endgerät ist, das eine Datenverbindung bereitstellt.

4. Verfahren nach Anspruch 1, bei dem der Anforderungskatalog mindestens die folgenden Informationen umfasst:
a) Erwartete durchschnittlich belegte Bandbreite;
b) Mindestanforderungen zur Durchführung einer mit dem Kommunikationsteilnehmer (2, 3, 27) verbundenen Aufgabe;
c) Informationen darüber, ob eine Datenreduktion für jeweilige Funktionen des Kommunikationsteilnehmers (2, 3, 27) schädlich ist;
d) Informationen darüber, ob ein zeitlicher Versatz in einer mit dem Kommunikationsteilnehmer (2, 3, 27) verbundenen Datenübertragung für jeweilige Funktionen des Kommunikationsteilnehmers (2, 3, 27) schädlich ist.

5. Verfahren nach einem der voranstehenden Ansprüche, bei dem mindestens ein Kommunikationsteilnehmer (2, 3, 27) seine Verortung an den intelligenten Verbindungsmanager übermittelt.

6. Verfahren nach einem der voranstehenden Ansprüche, bei dem der intelligente Verbindungsmanager immer dann, wenn eine Gesamtverfügbarkeit einer Bandbreite zur Datenübertragung für mindestens eine jeweilige Funktion der jeweiligen Kommunikationsteilnehmer (2, 3, 27) nicht mehr ausreicht, aktiviert wird und bei einer für sämtliche Funktionen der jeweiligen Kommunikationsteilnehmer (2, 3, 27) ausreichenden Bandbreite deaktiviert wird.

7. Vorrichtung zum Austausch von Daten in einer Kommunikationsanordnung mit einer Anzahl Kommunikationsteilnehmer (2, 3, 27), wobei die Vorrichtung als ein zentrales, in einem Fahrzeug integriertes Endgerät (28) ausgebildet ist, wobei jeweilige Kommunikationsteilnehmer (2, 3, 27) über das als Vermittlungsgerät verwendete integrierte Endgerät unter Verwendung einer Funkverbindung mit einer Datenquelle Daten austauschen können, und wobei von mindestens einem der Kommunikationsteilnehmer (2, 3, 27) ein Anforderungskatalog an einen auf dem integrierten Endgerät (28) ausgeführten intelligenten Verbindungsmanager übermittelbar ist, und wobei der Anforderungskatalog bandbreitenbedingte Informationen zu einer Applikation des mindestens einen Kommunikationsteilnehmers (2, 3, 27) umfasst, wobei der intelligente Verbindungsmanager dazu ausgebildet ist, eine jeweilige einem jeweiligen Kommunikationsteilnehmer (2, 3, 27) zugeordnete Bandbreite einer Datenverbindung zwischen dem mit der Anzahl Kommunikationsteilnehmer (2, 3, 27) verbundenen und als Vermittlungsgerät verwendeten integrierten Endgerät (28) und der Datenquelle dynamisch in Abhängigkeit einer bereitzustellenden Regel zu reduzieren oder zu erhöhen, wobei die Regel durch den intelligenten Verbindungsmanager selbst bereitgestellt ist und festlegt, nach welchem Muster bzw. welchen Anteilen eine jeweilige Bandbreite auf jeweilige Kommunikationsteilnehmer zu verteilen ist, wobei eine interne Priorisierung von auf einem in Form eines Rear Seat Entertainments ausgebildeten Kommunikationsteilnehmer (27) ausgeführten Applikationen bezüglich der zur Verfügung stehenden Bandbreite durch einen Fahrer des Fahrzeugs mittels eines Schiebereglers einer mit dem integrierten Endgerät (28) in Verbindung stehenden Regeleinheit (24) beeinflusst werden kann.

8. Vorrichtung nach Anspruch 7, bei der jeweilige Attribute jeweiliger Kommunikationsteilnehmer (2, 3, 27) in der erfindungsgemäßen Vorrichtung zu hinterlegen sind, wobei die Attribute von dem intelligenten Verbindungsmanager für eine Zuteilung von Bandbreiten zu den jeweiligen Kommunikationsteilnehmern (2, 3, 27) untereinander verwendungsfähig sind.

9. Vorrichtung nach einem der Ansprüche 7 oder 8, bei der mindestens ein Kommunikationsteilnehmer (2, 3, 27) der Kommunikationsanordnung ein mobiles Endgerät mit einem Internetzugang ist.

## Claims

1. Method for exchanging data in a communication system, wherein the communication system comprises a number of communication subscribers (2, 3, 27) and a central terminal (28) integrated in a vehicle, wherein respective communication subscribers (2, 3, 27) exchange data with a data source using a radio connection via the integrated terminal used as a switching device, and wherein at least one of the communication subscribers (2, 3, 27) transmits a catalogue of requirements to an intelligent connection manager running on the integrated terminal, and wherein the catalogue of requirements comprises bandwidth-related information about an application of the at least one communication subscriber (2, 3, 27), wherein a respective bandwidth, which is allocated to a respective communication subscriber (2, 3, 27), of a data connection between the integrated terminal (28), which is connected to the number of communication subscribers (2, 3, 27) and is used as a switching device, and the data source is reduced or increased dynamically by the intelligent connection manager depending on a rule that is to be provided, wherein the rule is provided by the intelligent connection manager itself and defines the pattern or proportions according to which a respective bandwidth is distributed to respective communication subscribers, wherein an internal prioritisation of applications with respect to the available bandwidth is influenced by a driver of the vehicle by means of a slider of a control unit (24) connected to the integrated terminal (28), said applications running on a communication subscriber (27) configured in the form of a rear seat entertainment device.

2. Method according to claim 1, in which at least one communication subscriber (2, 3, 27) is selected as an application on a terminal.

3. Method according to claim 1 or 2, in which at least one communication subscriber (2, 3, 27) is a mobile terminal device which provides a data connection.

4. Method according to claim 1, in which the catalogue of requirements comprises at least the following information:
a) Expected average occupied bandwidth;
b) Minimum requirements for performing a task associated with the communication subscriber (2, 3, 27);
c) Information about whether data reduction is detrimental to the respective functions of the communication subscriber (2, 3, 27);
d) Information about whether a time offset in a data transmission connected to the communication subscriber (2, 3, 27) is detrimental to the respective functions of the communication subscriber (2, 3, 27).

5. Method according to any one of the preceding claims, in which at least one communication subscriber (2, 3, 27) transmits its atrophy to the intelligent connection manager.

6. Method according to any one of the preceding claims, in which the intelligent connection manager is activated whenever the total available bandwidth for data transmission is no longer sufficient for at least one respective function of the respective communication subscribers (2, 3, 27), and is deactivated when the bandwidth is sufficient for all functions of the respective communication subscribers (2, 3, 27).

7. Device for exchanging data in a communication system with a number of communication subscribers (2, 3, 27), wherein the device is designed as a central terminal (28) integrated in a vehicle, wherein respective communication subscribers (2, 3, 27) can exchange data with a data source using a radio connection via the integrated terminal used as a switching device, and wherein at least one of the communication subscribers (2, 3, 27) can transmit a catalogue of requirements to an intelligent connection manager running on the integrated terminal (28), and wherein the catalogue of requirements comprises bandwidth-related information on an application of the at least one communication subscriber (2, 3, 27), wherein the intelligent connection manager is designed to reduce or increase dynamically, depending on a rule that is to be provided, a respective bandwidth, which is allocated to a respective communication subscriber (2, 3, 27), of a data connection between the integrated terminal (28), which is connected to the number of communication subscribers and is used as a switching device, and the data source, wherein the rule is provided by the intelligent connection manager itself and defines the pattern or proportions according to which a respective bandwidth is distributed to respective communication subscribers, wherein an internal prioritisation of applications with respect to the available bandwidth can be influenced by a driver of the vehicle by means of a slider of a control unit (24) connected to the integrated terminal (28), said applications running on a communication subscriber (27) configured in the form of a rear seat entertainment device,.

8. Device according to claim 7, in which the respective attributes of respective communication subscribers (2, 3, 27) are to be stored in the device according to the invention, wherein the attributes from the intelligent connection manager can be used for mutually allocating bandwidths to the respective communication subscribers (2, 3, 27).

9. Device according to any one of claims 7 or 8, wherein at least one communication subscriber (2, 3, 27) of the communication system is a mobile terminal with internet access.

## Revendications

1. Procédé d'échange de données dans un système de communication, le système de communication comprenant un nombre de participants à la communication (2, 3, 27) et un terminal (28) central intégré dans un véhicule, dans lequel les participants à la communication respectifs (2, 3, 27) échangent des données avec une source de données par l'intermédiaire du terminal intégré utilisé en tant qu'appareil de transmission à l'aide d'une liaison radio, et dans lequel au moins un des participants à la communication (2, 3, 27) transmet un catalogue d'exigences à un gestionnaire de connexions intelligent exécuté sur le terminal intégré, et dans lequel le catalogue d'exigences comprend des informations liées aux bandes passantes relatives à une application du au moins un participant à la communication (2, 3, 27), dans lequel une bande passante respective attribuée à un participant à la communication respectif (2, 3, 27) d'une liaison de données entre le terminal (28) intégré relié au nombre de participants à la communication (2, 3, 27) et utilisé en tant qu'appareil de transmission et la source de données est réduite ou augmentée par le gestionnaire de connexions intelligent dynamiquement en fonction d'une règle à fournir, dans lequel la règle est fournie par le gestionnaire de connexions intelligent lui-même et détermine le type d'échantillon et/ou de proportions selon lesquels une bande passante respective est répartie sur chaque participant à la communication, dans lequel une priorisation interne d'applications relatives à la largeur de bande disponible implémentées sur un participant à la communication (27) conçu sous la forme d'un « Rear Seat Entertainment » est influencée par un conducteur du véhicule au moyen d'un curseur d'une unité de réglage (24) connectée au terminal (28) intégré.

2. Procédé selon la revendication 1, dans lequel au moins un participant à la communication (2, 3, 27) est sélectionné en tant qu'application sur un terminal.

3. Procédé selon la revendication 1 ou 2, dans lequel au moins un participant à la communication (2, 3, 27) est un terminal mobile qui établit une liaison de données.

4. Procédé selon la revendication 1, dans lequel le catalogue d'exigences comprend au moins les informations suivantes :
a) Largeur de bande occupée en moyenne prévue ;
b) Exigences minimales pour la réalisation d'une tâche reliée au participant à la communication (2, 3, 27) ;
c) Informations permettant de déterminer si une réduction des données est nocive pour les fonctions respectives du participant à la communication (2, 3, 27) ;
d) Informations permettant de déterminer si un décalage temporel dans la transmission de données reliées au participant à la communication (2, 3, 27) est nocif pour les fonctions respectives du participant à la communication (2, 3, 27).

5. Procédé selon l'une quelconque des revendications précédentes, dans lequel au moins un participant à la communication (2, 3, 27) transmet sa localisation au gestionnaire de connexions intelligent.

6. Procédé selon l'une quelconque des revendications précédentes, dans lequel le gestionnaire de connexions intelligent est toujours activé lorsqu'une disponibilité complète d'une bande passante destinée à la transmission de données ne suffit plus pour au moins une fonction respective du participant à la communication respectif (2, 3, 27), et est désactivé en cas de bande passante suffisante pour toutes les fonctions des participants à la communication respectifs (2, 3, 27).

7. Dispositif d'échange de données dans un système de communication avec un nombre de participants à la communication (2, 3, 27), dans lequel le dispositif est conçu comme un terminal (28) central intégré dans un véhicule, dans lequel les participants à la communication respectifs (2, 3, 27) peuvent échanger des données avec une source de données par l'intermédiaire du terminal intégré utilisé en tant qu'appareil de transmission à l'aide d'une liaison radio, et dans lequel au moins un des participants à la communication (2, 3, 27) transmet un catalogue d'exigences à un gestionnaire de connexions intelligent exécuté sur le terminal (28) intégré, et dans lequel le catalogue d'exigences comprend des informations liées aux bandes passantes relatives à une application du au moins un participant à la communication (2, 3, 27), dans lequel le gestionnaire de connexions intelligent est conçu de manière à réduire ou augmenter une bande passante respective attribuée à un participant à la communication respectif (2, 3, 27) d'une liaison de données entre le terminal (28) intégré relié au nombre de participants à la communication (2, 3, 27) et utilisé en tant qu'appareil de transmission et la source de données dynamiquement en fonction d'une règle à fournir, dans lequel la règle est fournie par le gestionnaire de connexions intelligent lui-même et détermine le type d'échantillon et/ou de proportions selon lesquels une bande passante respective doit être répartie sur chaque participant à la communication, dans lequel une priorisation interne d'applications relatives à la largeur de bande disponible implémentées sur un participant à la communication (27) conçu sous la forme d'un « Rear Seat Entertainment » peut être influencée par un conducteur du véhicule au moyen d'un curseur d'une unité de réglage (24) connectée au terminal (28) intégré.

8. Dispositif selon la revendication 7, dans lequel des attributs respectifs des participants à la communication respectifs (2, 3, 27) doivent être déposés dans le dispositif selon l'invention, les attributs étant utilisables entre eux par le gestionnaire de connexions intelligent pour une attribution des bandes passantes aux participants à la communication respectifs (2, 3, 27).

9. Dispositif selon l'une des revendications 7 ou 8, dans lequel au moins un participant à la communication (2, 3, 27) du système de communication est un terminal mobile disposant d'un accès Internet.
